# EUROPEAN PATENT APPLICATION

(11) **EP 2 843 180 A2**
(43) Date of publication of application: **04.03.2015**
(21) Application number: 14189423.8
(22) Date of filing: 04.06.2009
(51) Int. Cl.: E06B 9/386, E06B 9/326, E06B 9/24

(54) **Blind device for light protection and displaying of information**

(30) Priority: 04.06.2008 DE 102008002219
(62) Divisional of application: 09757300.0
(71) Applicant: Mediabiose GmbH, 80339 München (DE)
(72) Inventor: The designation of the inventor has not yet been filed
(74) Representative: Vossius & Partner

(57) **Abstract**

The present invention relates to a blind device (1,12) for controllable sunlight protection comprising a plurality of slats (3) each being movably attached to said blind device, at least one guide cord (17) being adapted to hold the slats (3) and/or to rotate the slats (3), means for linearly movable arrangement of the slats, a wire (5) comprising one or more cables for providing electrical connection, and a plurality of light sources (9) for fulfilment of an illumination and/or display function being attached to the slats (3), wherein the light sources (9) are arranged on light source carriers (10) that are attached to and/or integrated into the plurality slats (3), and wherein a connection between the wire (5) and the respective light source carriers (10) is designed as a releasable connection.

## Description

### Technical Field

The invention relates to a blind device, particularly a Venetian blind device, comprising at least one slat for light protection, an arrangement comprising at least one of the blind devices and a method for light protection and for the display of information.

### Technical Background

Regarding the illumination of buildings, devices are known which mostly have one or more immobile carrier systems which are connected to one or more light sources and serve for illuminating the building from the outside. Simultaneously, also display devices are known which serve to display information and are designed as a board or table or as several boards or tables arranged next to each other. Display devices that have different transparencies are also known from EP-A-1-293-955. All these systems have fixed devices which do not have the purpose of fulfilling a sun light protection function and do not allow a corresponding adjustability to different angle of sun radiation and intensity.

On the other hand, sun protection devices in the form of, for example, borderless slats are known which mostly have at least two pairs of guide cords for holding and turning the slats and only have the function to protect against sun or environmental light in order to prevent blinding of unwanted heating up of the building. Such arrangements are known from the common kinds of blinds, e.g. as described in DE-A-10-2004-061988.

DE-A-10-2005-032675 describes a sun protection apparatus for buildings. The apparatus comprises adjustable light protection slats having a light source for direct and/or indirect lamination of artificial light.

DE-A-103-44213 describes a light protection and illumination device having a semiconductor layer on at least one side thereof. The semiconductor converts light energy into electrical energy which can be stored in an energy storage device.

DE-C-101-31598 describes a sun light protection device having a plurality of OLEDs for displaying of information. The OLEDs are arranged on the support unit and controlled by a control unit.

DE-10-2005-6030166 describes an illumination device having light sources integrated in the fabric hangings in order to provide a blind-free and variable illumination.

US-A-2007-0159413 describes a display system having a plurality of display units, wherein each of the display units is moveable between at least a first position and a second position, wherein the display unit at the first position is vertical to the display units at the second position. The display unit is provided with light emitting elements for displaying at the first or the second position of the display unit.

EP-A-1594109 describes a display device comprising a plurality of support units having an elongated recess for receiving LEDs and circuit boards, wherein at least some of the LEDs are protruded from recess of the support units. The support units rotate between an operational position and a non-operational position.

Previous embodiments of light sources in shade arrangements cannot, however, at the same time be used and adjusted like a blind. In particular, in modern architecture the kind of artificial laminar illumination and display of information at or on facades is desired, at the same time the light protection, particularly the sun light protection through different weather conditions and daylight intensities is indispensable according to the current demands on buildings. As sun light intensity and angle of radiation changes during a day and also during a year the move and rotation of the slats enables the amount of sun light coming through it to be flexibly adjusted. Instead, such recordable planes in the art are attached as separate tables and are not integrated in the buildings in a way allowing a flowless proceeding of the described function. Furthermore, the conventional light protection and information display device are provided in a particular proprietary construction. In order to add the display function to a blind device, the whole blind device need to be replaced, or both need to be installed separately, which is inflexible, may cause high cost, is inconvenient for the installation.

### Object of the invention

The object of the present invention is to provide an improved or alternative modular blind device that can be integrated in a building and fulfil not only the improved adjustable light protection but also an improved information displaying information function.

The display function may be also added to a conventional sun light protection blind device by arranging light sources onto the existing blind device. The modularity of the present invention facilitates a flexible selection of blind device beforehand as well as the possibility of adding the displaying function when the blind device already exists.

As the slat may be rotated around its longitudinal axis and moved up and down, the linear position and the angle position of the slats may be variable in accordance with the demand for light protection and/or displaying of information.

### Technical solution

The object can be obtained by the subject-matter defined in claims or described below.

According to the present invention the problem is solved by a blind device for controllable light protection and/or displaying of information. Said device comprises: at least one slat being moveably arranged, at least one light source attached to said slat, a guide cord being adapted to hold the slat in the blind device and/or to rotate said slat, a lifting strip being adapted to elevate the slat within said blind device and a wire for providing electrical connection, wherein said wire is guided through the slat and/or along the guide cord and/or the lifting strip.

According to a preferred embodiment, a plurality of slats each individually or in groups are adapted to be rotated around their longitudinal axes respectively, and/or the plurality of slats are adapted to be moved linearly such as up and down. Therefore, the blind device may provide at the same time an adjustable light protection especially day light protection and controllable light and display area. The blind device is adjustable in order to receive a variable daylight and/or ensure adjustable view and sight partitions and/or display area that is at the same time flexible, a light and display device is built into an adjustable light protection element.

According to a preferred embodiment, the blind device may have one or more light sources that are integrated in a slat, called also a blind/light protection element so that they allow irradiation of light and/or display or light to provide information for a spectator when they are switched on. The light sources are integrated in such a way and connected with each other via appropriate wires that they are directly coupled to the blind/light protection element and allow the faultless drive up and drive down, ruffling and/or adjustment of the blind/light protection elements.

According to a preferred embodiment, the linear and the rotatable movement of said slat may be driven by an electrical driving means which may be integrated in the blind device or formed as an external device.

According to a preferred embodiment, said wire may comprise at least a first cable for supplying electrical energy to said light source and/or to the electrical driving means and/or at least a first cable for supplying data and/or signals to said light sources.

According to a preferred embodiment, the plurality of slats are adapted to be elevated up or down according to the desired amount of sunprotection and/or light and display configuration.

According to a preferred embodiment, the linear and the rotatable movements of said slat are driven by an electrical driving means.

According to a preferred embodiment, said wire comprises at least a first cable for supplying electrical energy or signals at least to said light source and/or to the electrical driving means. According to a preferred embodiment, a slat control unit is configured for transmitting a control signal, wherein said slat control unit is adapted to determine the angle und/or the position of the slat.

According to a preferred embodiment, said wire is integrated or bundled with the lifting strip and/or with the guide cord.

According to a preferred embodiment, said lifting strip comprises at least one housing for receiving wires.

According to a preferred embodiment, said wire is connected to corresponding light sources via at least one removable connection.

According to a preferred embodiment, said wire extends outwardly via a small edge on the side of the slat and/or on the longitudinal side of the slat. The electrical connections may be made by contacting the wire from being received in the wire with an construction frame surrounding the slats. Both ends of the slat are configured not to hinder the receiving of the wire in the construction frame.

According to a preferred embodiment, said wire extends from an end of the slat into a frame surrounding the blind device.

According to a preferred embodiment, the wire is designed and arranged to facilitate the linear and the rotational movement of the slats and/or to follow the stacking and ruffling of the guide cord.

According to a preferred embodiment, the light source comprises a plurality of LEDs and/or OLEDs.

According to a preferred embodiment, said light source for fulfilment of an illumination function and/or display function is arranged on a light source carrier attached to and/or integrated into at least one of the plurality slats.

According to a preferred embodiment, said light source carrier is designed as a component being adapted to be connected to the slat. The light source carrier preferably comprises a circuit board or is the circuit board itself.

According to a preferred embodiment, the light source carrier is integrated into or provided by the slat and/or directly optically coupled to the slat.

According to a preferred embodiment, the light source carrier comprises a first circuit board and at least one casing for protection of the light source and or circuit board.

According to a preferred embodiment, said light source carrier further comprises a second circuit board being positioned adjacent to or attached to the first circuit board, wherein the second circuit board is designed primarily to transform the electrical current and/or to transmit the signals via the wire(s) into the light sources.

According to a preferred embodiment, said casing is made of acrylic and/or a metallic material and/or has a round or oval or polygonal shape.

According to a preferred embodiment, said slat is designed as light source carrier.

According to a preferred embodiment, the said slat or at least the light source and/or the light source carrier has a coating, a lamination, a pattern, and/or a grouting to improve its optical and/or technical characteristics.

According to a preferred embodiment, said blind device consists of a combination of materials having different technical characteristics in order to influence the light in the area of the light source in the desired way, in particular to display, deflect and/or absorb the light.

According to a preferred embodiment, at least one of the plurality of said slats is formed for receiving and/or arranging said source.

According to a preferred embodiment, at least one of the plurality of said slats has a concave, convex and/or planar surface which is preferably light reflecting and/or light absorbing and/or light directing.

According to a preferred embodiment, said blind device is arranged to be free-standing.

According to a preferred embodiment, said blind device comprises a photovoltaic element. The photovoltaic layer can be build as thin layer, laminat or coating preferably arranged on tha top of a slat.

According to a further aspect, the present invention provides an assembly comprising at least one blind device according to one of the preceding claims, wherein said blind device is integrated in sun protection arrangements or venetian blind arrangements.

According to a preferred embodiment, said assembly comprises at least one blind device according to one of the preceding claims, wherein said assembly has a plurality of blind devices arranged on top of each other and/or next to each other.

According to a preferred embodiment, the assembly has a building front close to which at least one blind device is arranged.

According to a preferred embodiment, said blind device is built in front of or behind one or in front of, behind or between several transparent or opaque panes, such as glass panes.

According to a preferred embodiment, said blind devices can be switched on independently or in groups from each other and/or separately.

According to a preferred embodiment, said light sources of said at least one blind device form a display panel that can be used for illumination or information carrier for animations and/or images, videos etc.

According to a preferred embodiment, said light sources of said plurality of slats is adapted for displaying a text banner when said slats linearly moved close to each other; and wherein for said light sources of said plurality of slats is adapted for displaying images and/or animation and/or videos when said plurality of slats moved linearly apart to each other.

According to a further aspect, the present invention provides for controllable light protection and/or displaying of information by using at least one blind device having a plurality of slats (3) each being moveably attached to said blind device, at least one guide cord being adapted to hold the slat within said blind device and/or to rotate said slat, at least one lifting strip being adapted to elevate the slat within the blind device and a wire comprising one or more cables for providing electrical connections to said blind device, wherein the method comprises the steps of: a) arranging a plurality of light sources at least on one light source carrier and attaching the light source carrier to a plurality of slats; b) forming at least one display panel comprised of said plurality of light sources; c) supplying electrical current and/or signals to said light source and sending an electrical signal containing said information to a display control unit via said wire or via wireless connection; d) processing said electrical signal and/or signals by said display control unit and controlling said plurality of light sources individually or in groups to illuminate and output the information visually on said display panel.

According to a preferred embodiment, the method further comprises the steps of: supplying electrical current to an electrical driving means for driving said plurality of slats; transmitting a control signal from a slat control unit, wherein said slat control unit is adapted to determine the angle und/or the position of the slat, preferably in accordance with the radiation angle of the sunlight.

According to a preferred embodiment, wherein the method further comprises the steps of: changing the distance between each of said plurality of slats by linearly moving said plurality of slats close to each other when displaying information requiring information with higher resolution, such as a text passage; or changing the distance between each of said plurality slats by linearly moving said plurality of slats apart from each other when displaying a larger image requiring smaller resolution such as images or animation of images.

According to a preferred embodiment, said plurality of the light sources may be divided into at least two groups having different illumination directions, wherein the method further comprises the steps of: rotating said plurality of slats to change the angle of viewing point for a watcher, in order to provide a different information as the initial displayed information or in order to provide a different level of sunlight protection. In particular, the plurality of slats may be divided into a first or a second group. Preferably, each group has substantially the same number of slats. The slats within the first group may be alternately arranged in respect to slats of the second group. The slats within the first group may have different rotational angle as of the second group. According to this embodiment, the display panel formed by the first and the second group of slats may simultaneously display two different images or animation or the like. Depending on the viewing angle, only one of the displayed images or animation may be visible for the viewer, as the illuminate angle of the slats is in accordance with the rotational angle. According to a further embodiment, the plurality of the slats may divided into multiple groups. Consequently, the display panel may provide multiple visible information simultaneously for different purposes and/or viewers in different locations. As the slats may be continuously rotated and/or linearly moved, the viewing angle can be changed steplessly within a range of 180°. This enables an enlarged area where the viewer is located.

According to a preferred embodiment, wherein the method further comprises the steps of: arranging a plurality of said blind devices on top of each other and/or next to each other, in order to enlarge said display panel for displaying information; wherein each of said blind devices is capable to be controlled individually or in groups in respect of their movement and/or signal of displayed information.

The blind device preferably has means for rotatably attaching the slat to an object, in particular, for a rotation of the slat around a longitudinal axis of the slat. The blind/sun protection element (i.e. the slat) has a shape that has a stronger pronounced linearity in the longitudinal axis. The narrow end of the blind/sun protection element can be designed differently as regards geometry: oval, concavely, convexly, straightly or wave-like. Further, the blind device comprises means for linearly moveable arrangement of the slats to an object, i.e. the slats are capable to be elevated up and down or from the left to the right in respect to the object. The light sources according to the present invention are arranged so that the movement of the slats are not hindered.

A preferred advantage of the blind device according to the present invention is that the drive up of the blinds occurs simultaneously with the one or more integrated light sources. The operation of the blind device is similar to the operation of a usual sun protection blind.

A further preferred advantage is that when piling up the light sources integrated in the blind/sun protection elements can be arranged close on top of each other and therefore allow a free sight and full transparency for the viewer. The invention allows a flexible use on the building front and is no obstacle as previous display and light arrangements have been.

The following aspects are preferred embodiments of the invention.
1. A blind device (1) for controllable light protection and/or displaying of information, said device comprises: at least one slat (3) being moveably arranged, at least one light source (9) attached to said slat (3), a guide cord (17) being adapted to hold the slat in the blind device and/or to rotate said slat (3), a lifting strip (4) being adapted to elevate the slat within said blind device and a wire (5) for providing electrical connection, wherein said wire (5) is guided through the slat and/or along the guide cord (17) and/or the lifting strip (4).
2. The blind device according to aspect 1, wherein said slat comprises one or more slats each individually or in groups being adapted to be rotated around their longitudinal axes respectively.
3. The blind device according to one of the preceding aspects, wherein the plurality of slats (3) are adapted to be elevated up or down.
4. The blind device according to one of the preceding aspects, wherein the linear and the rotatable movements of said slat are driven by an electrical driving means.
5. The blind device according to one of the preceding aspects, wherein said wire comprises at least a first cable for supplying electrical energy at least to said light source (9) and/or to the electrical driving means.
6. The blind device according to one of the preceding aspects, wherein a slat control unit is configured for transmitting a control signal, wherein said slat control unit is adapted to determine the angle und/or the position of the slat.
7. The blind device according to one of the preceding aspects, wherein said wire (5) is integrated or bundled with the lifting strip and/or with the guide cord.
8. The blind device according to aspect 7, wherein lifting strip comprises at least one housing for receiving wires.
9. The blind device according to one of the preceding aspects, wherein said wire (5) is connected to corresponding light sources (9) via at least one removable connection.
10. The blind device according to one of the preceding aspects, wherein said wire (5) extends outwardly via a small edge on the side of the slat (3) and/or on the longitudinal side of the slat.
11. The blind device according to one of the preceding aspects, wherein said wire (5) extends from an end of the slat (3) into a frame surrounding the blind device.
12. The blind device according to one of the preceding aspects, wherein the wire (5) is designed and arranged to facilitate the linear and the rotational movement of the slats (3) and/or to follow the stacking and ruffling of the guide cord.
13. The blind device according to one of the preceding aspects, wherein the light source (3) comprises a plurality of LEDs and/or OLEDs.
14. The blind device according to one of the preceding aspects, wherein said light source (9) for fulfilment of an illumination function and/or display function is arranged on a light source carrier (10) attached to and/or integrated into at least one of the plurality of slats (3).
15. The blind device according to aspect 14, wherein said light source carrier (10) is designed as a component being adapted to be connected to the slat (3).
16. The blind device according to one of the preceding aspects 14-15, wherein the light source carrier (10) is integrated into or provided by the slat (3) and/or directly optically coupled to the slat (3).
17. The blind device according to one of the preceding aspects 14-16, wherein the light source carrier (10) comprises a first circuit board and at least one casing for protection of the light source (9).
18. The blind device according to aspect 17, wherein said light source carrier (10) further comprises a second circuit board being attached to the first circuit board, wherein the second circuit board is designed primarily to transform theelectrical current and/or to transmit the signals via the wire(s) into the light sources.
19. The blind device according to aspect 18, wherein said casing is made of acrylic and/or a metallic material and/or has a round or oval or polygonal shape.
20. The blind device according to one of the preceding aspects, wherein the slat (3) is designed as light source carrier (10).
21. The blind device according to one of the preceding aspects, wherein the slat (3) or at least the light source has a coating, a lamination, a pattern, and/or a grouting to improve its optical and/or technical characteristics.
22. The blind device according to one of the preceding aspects, wherein said blind device consists of a combination of materials having different technical characteristics in order to influence the light in the area of the light source in the desired way, in particular to display, deflect and/or absorb the light.
23. The blind device according to one of the preceding aspects, 2-22, wherein at least one of the plurality of said slats (3) is formed for receiving and/or arranging said source (9).
24. The blind device according to one of the preceding aspects, 2-23, at least one of the plurality of said slats (3) having a concave, convex and/or planar surface which is preferably light reflecting and/or light absorbing and/or light directing.
25. The blind device according to one of the preceding aspects, wherein the blind device is arranged to be free-standing.
26. The blind device according to one of the preceding aspects, wherein the blind device comprises a photovoltaic element preferably arranged as a layer on the top of a slat.
27. Assembly comprising at least one blind device according to one of the preceding aspects, wherein said blind device is integrated in sun protection arrangements or Venetian blind arrangements.
28. Assembly comprising at least one blind device according to one of the preceding aspects, wherein said assembly has a plurality of blind devices arranged on top of each other and/or next to each other.
29. Assembly comprising at least one blind device according to one of the preceding aspects, wherein the assembly has a building front adjacent to which at least one blind device is arranged.
30. Assembly comprising at least one blind device according to one of the preceding aspects, wherein said blind device is built in front of or behind one or in front of, behind or between several transparent or opaque panes, such as glass panes.
31. Assembly comprising at least one blind device according to one of the preceding aspects, wherein said blind devices can be switched on independently or in groups from each other and/or separately.
32. Assembly comprising at least one blind device according to one of the preceding aspects, wherein said light sources of said at least one blind device form a plane that can be used for illumination or information carrier for animations and/or images, videos etc.
33. Assembly comprising at least one blind device according aspect 32, wherein said light sources of said plurality of slats are adapted for displaying a text banner when said slats linearly moved close to each other; and wherein said light sources of said plurality of slats are adapted for displaying images and/or animation and/or videos when said plurality of slats moved linearly apart to each other.
34. Method provided for controllable light protection and/or displaying of information by using at least one blind device having a plurality of slats (3) each being moveably attached to said blind device, at least one guide cord (17) being adapted to hold the slat within said blind device and/or to rotate said slat (3), at least one lifting strip (4) being adapted to elevate the slat within the blind device and a wire (5) comprising one or more cables for providing electrical connections to said blind device, wherein the method comprises the steps of:
   a) arranging a plurality of light sources (9) at least on one a light source carrier and attaching the light source carrier to the plurality of slats (3);
   b) forming at least one display panel comprised of said plurality of light sources (9);
   c) supplying electrical current to said light source (9) and sending an signal containing said information to a display control unit via said wire (5) or via wireless connection;
   d) processing said electrical signal by said display control unit and controlling said plurality of light sources (9) individually or in groups to illuminate and output the information visually on said display panel.
35. Method according to aspect 34, wherein the method further comprises steps of:
   supplying electrical current to an electrical driving means for driving said plurality of slats (3);
   transmitting a control signal from a slat control unit, wherein said slat control unit is adapted to determine the angle und/or the position of the slat, preferably in accordance with the radiation angle of the sunlight.
36. Method according to any one of the aspects, 34-35, wherein the method further comprises the steps of:
   changing the distance between each of said plurality of slats (3) by linearly moving said plurality of slats (3) close to each other when displaying information requiring information with higher resolution, such as a text passage; or
   changing the distance between each of said plurality of slats (3) by linearly moving said plurality of slats (3) apart from each other when displaying a larger image requiring smaller resolution such as images or animation of images.
37. Method according to any one of the aspects, 34-36, wherein said plurality of the light source are divided into at least two groups having different illumination directions, wherein the method further comprises the steps of:
   rotating said plurality of slats to change the angle of viewing point for a watcher, in order to provide a different information than the initial displayed information in step c), or in order to provide a different level of sunlight protection.
38. Method according to any one of the aspects, 34-37, wherein the method further comprises the steps of: arranging a plurality of said blind devices on top of each other and/or next to each other, in order to enlarge said display panel for displaying information; wherein each of said blind devices is capable to be controlled individually or in groups in respect of their movement and/or signal of displayed information.

### Short description of the Figures

Particular embodiments of the present invention are explained in the following with the attached Figures.
Fig. 1 shows a conventional blind arrangement corresponding to the prior art and being in light protection position wherein the slats are arranged to each other at larger distance. The Figure shows a front view and a side view;
Fig. 2 shows a conventional blind arrangement corresponding to the prior art and being in raffled position wherein the slats are arranged closely to each other to allow more light coming from outside and a better view from the inside. The Figure shows a front view and a side view;
Fig. 3 shows a schematic view of the slat of a blind device according to the present invention;
Fig. 4 shows a schematic side view of the functional principle of a blind device according to the present invention, wherein the light source is arranged on an independent light source carrier and wherein the light source carrier has a housing;
Fig. 4.1 shows a schematic side view of the functional principle of a blind device according to the present invention, wherein the light protection element serves as light source carrier for the light sources and no additional separate light source carrier is needed;
Fig. 5 shows a first embodiment of the cable route of a blind device according to the present invention;
Fig. 6 shows a second embodiment of the cable route of a blind device according to the present invention;
Fig. 7 shows exemplary embodiments of the blind device according to the present invention;
Fig. 8 shows sketchy perspective views of two embodiments of Fig. 6;
Fig. 9 shows a perspective view of one of the embodiments of the blind device according to the present invention indicated in Fig. 6, when a plurality of blind devices are arranged on top of each other and form a blind arrangement according to the present invention. The light sources that are arranged like a matrix enable a light and/or medial playing-on the whole plane;
Fig. 10 shows a perspective view of one of the embodiments of the blind device according to the present invention indicated in Fig. 6 when the blind devices are driven up and ruffled and the slats are stacked on top of each other so that the distance is minimal;
Fig. 11 shows a perspective view of the functional principle of the intelligent control mechanism according to the present invention, wherein the blind device is arranged such that the shadow of the stationary components in which some of the photovoltaic elements are arranged may be kept as minimal as possible;
Fig. 12 shows a preferred embodiment according to the present invention, in which the light source carrier, in particular the circuit boards are configured modularly;
Figs. 12a - 12e show exemplary embodiments for variations of the wire arrangement; and

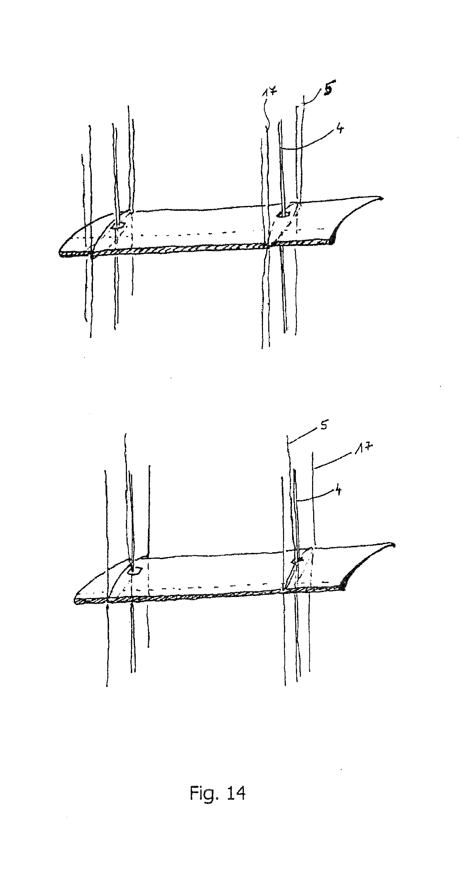

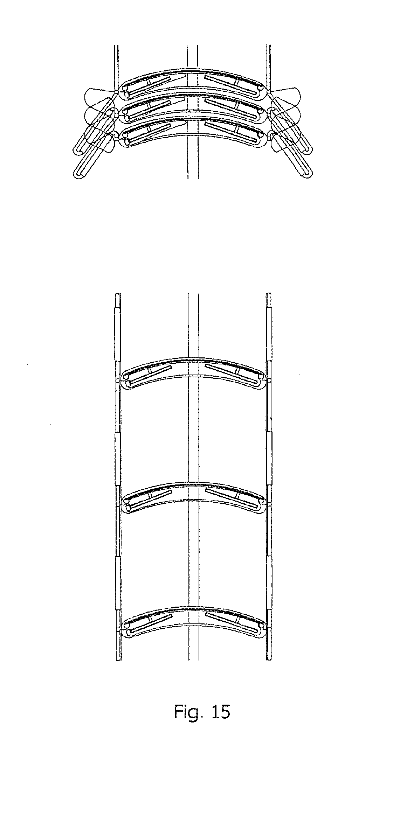

Figs. 14 and 15 show an embodiment for a wire arrangement.

### Description of preferred embodiments

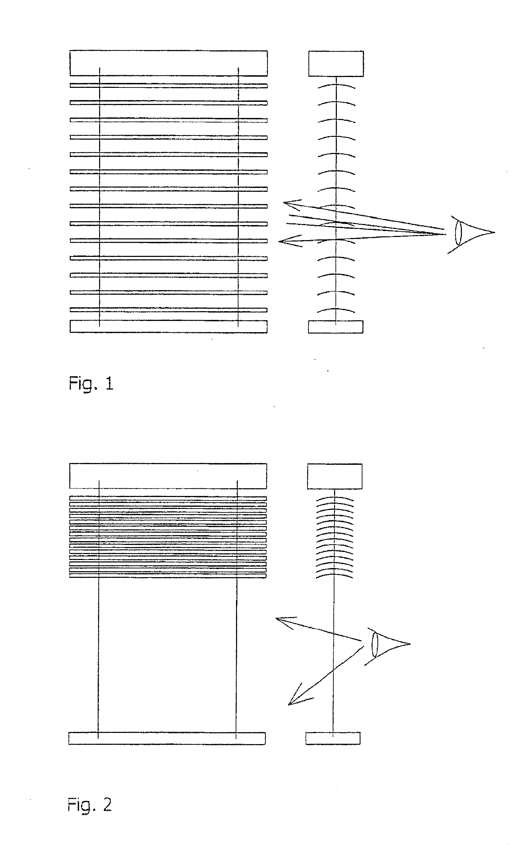

Fig. 1 and Fig. 2 show a conventional sun protection arrangement consisting of several slats only having the function of sun protection.

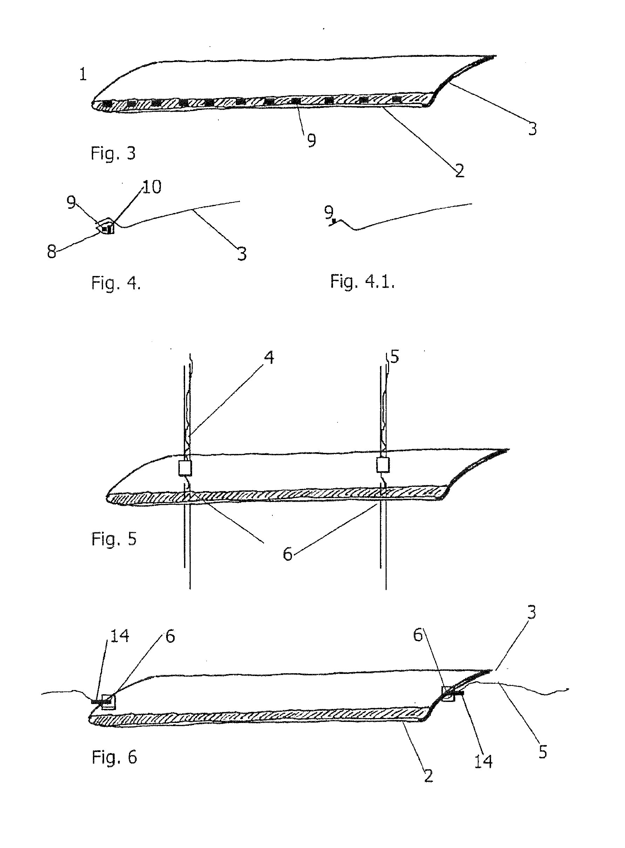

Fig. 3 shows a blind device 1 comprised of a light protection slat 3 and a light and display arrangement 2. Each light and display arrangement 2 comprises one or more light sources coupled optically to the light protection element 3.

Fig. 4 shows an embodiment in which the light sources 9 are arranged at a separately designed light source carrier 10 surrounded by a housing, wherein the housing may be optional.

Fig. 4.1 shows an embodiment in which the light or sunlight protection element 3 may be the light source carrier 10. In this case no light source carrier 10 has to be arranged if the light protection element 3 per se has the material properties to serve as such. Furthermore, the light protection element 3 can be designed such that its natural properties are upgraded by coating, applying patterns, making holes or deformation so that no separate light source carriers 10 are needed when inserting the light sources 9.

Figs. 3-6 show perspective views of exemplary embodiments in which the light protection element 3 preferably has a more distinctive longitudinal axis. The embodiment of these elements is realized so that the light protection elements 3 can be driven up or down and/or adjusted together with light sources 9 and light source carriers 10. Special configurations of the light protection element 7 are also possible wherein the light protection element is separated into several areas by buckling and/or bending.

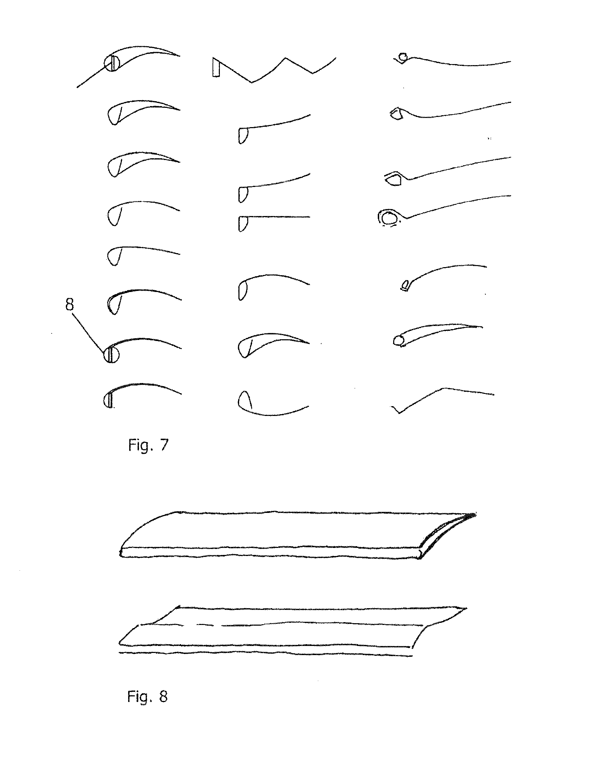

Fig. 7 shows possible embodiments of the blind device 1 according to the present invention. It is to be noted that each of these embodiments has the two basic functions, namely adjustable light protection and controllable light and/or display arrangement. The deformation of the light protection element 3 can serve for direct reception of the light sources 9 as already explained. Furthermore, it is possible that by deforming the sun protection element 3, the properties of the integrated light source 9 regarding light reflection, light absorption or light control can be extended.

Fig. 8 shows a perspective view of two of the possible embodiments. It is to be pointed out that the light protection element 3 of the blind device 1 can be realized by several geometrical shapes.

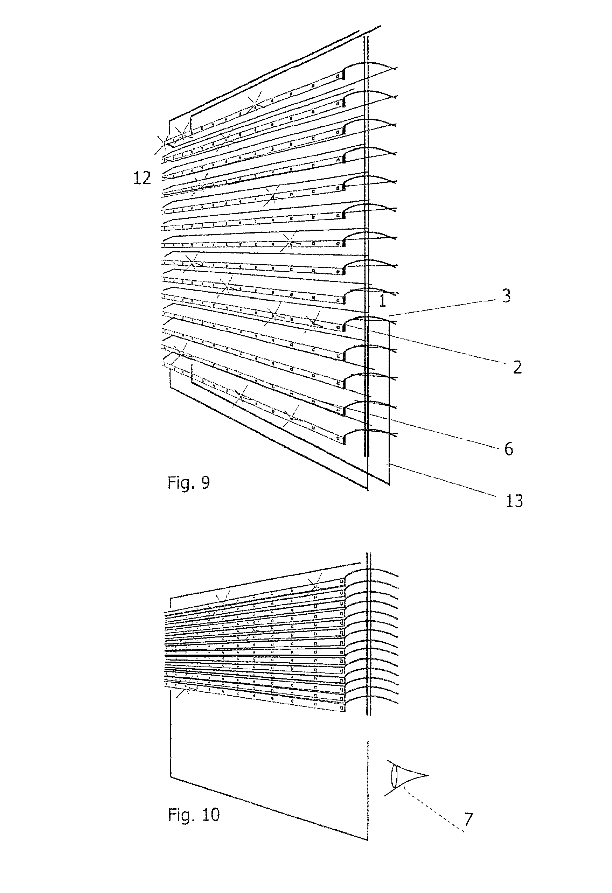

Fig. 9 shows in a perspective view how a plurality of blind devices can work together by using them for light protection but simultaneously allow a light and display function. Said position of the blind devices according to the present invention can also be described by the term "medial playing". The term "medial playing" in this context means each kind of graphical, coloured or black and white, moved or still format created by the light sources 9 that are integrated in the blind device. This is achieved due to the fact that each single light source 9 or a plurality of light sources 9 can be controlled together and thus form a medial plane 12. A medial plane 12 consists of one or more blind devices 1 according to the present invention.

Fig. 10 shows in a perspective view a further position of a plurality of blind devices 1 according to the present invention that are in this case driven up and thus closely stacked and ruffled next to each other. The Figure aims at showing which manifold fields of application are given by the flexible controlling of the blind devices. In this case only partial areas would be recorded and/or illuminated wherein the remaining part is free for unhindered sight. This embodiment is particularly appropriate for the use on building fronts as thus a controllable transparency of the building front is secured and simultaneously an additional useful light and display function is present.

The blind devices can be stacked and ruffled with different distances during the drive up. This can result in several interim positions.

The controllable blind devices can also be portioned so that in a medial plane 12 a certain number of blind devices according to the present invention drives up and a certain number down. The reason for that is the simplified cable route in which the number of the cables leading out of the blind devices is portioned.

The blind device according to the present invention further involves the preferred advantage that it can serve as an adjustable light protection and/or as a light and display area in each of the interim positions whereas already known arrangements exhibit either only sun protection function or a light and display function. The already known arrangements are not flexible adjustable in terms of improved utilisation of day light either and can thus not secure sufficient transparency when it is needed.

In Figs. 5 and 6 it is shown how the cable route of the single blind devices can work in the embodiments. Due to the fact that each blind device can be simultaneously an adjustable sun protection and/or a light and display area, the integration of the cables supplying electric circuit board for the light sources and/or for their controlling is particularly important.

In the preferred embodiment illustrated in Fig. 6, the cabling is effected by leading the light source connection wire 5, preferably cable, out of the narrow side of the blind device 1. The light source connection wire 5 can be led out one-sided or two-sided. According to this embodiment, the light source connection wire 5 can be integrated in a guide pillar 14 which works simultaneously when driving the blind up and down.

A further preferred aspect according to the present invention is considered in which the light source connection wire(s) 5 is/are led into a corresponding fitting construction 13 so that they, or the major part of them, remain invisible to the viewer and protected by any environmental influences, such as aging by radiation or humidity.

It is a further preferred aspect according to the present invention that the connection between light source carrier 10 and light source connection wire 5 can be designed as a releasable connection 6. This would involve the advantage that maintenance of the wire can be facilitated, in case the blind device I or the light carrier 10 needs to be replaced. This also provides the preferred advantage of a modular assembly which makes it possible to assemble or replace individual parts or grouped parts on a modular basis.

In Fig. 5 the conduction of the light source connection wires of the separate blind devices is effected by integrating the light source connection wires 5 in lifting strips 4 that can be advantageously used to lift and/or adjust at least one of the preferred blind devices. According to this embodiment, the lifting strips 4 are designed so that they can receive cables and advantageously have a housing facilitating the integration of the cables.

According to a further preferred embodiment, coupling of the light source connection wire 5 between two or more of the blind devices is also possible. This means that two or more blind devices can be connected after each other before one wire is led away from the last or from the first blind device.

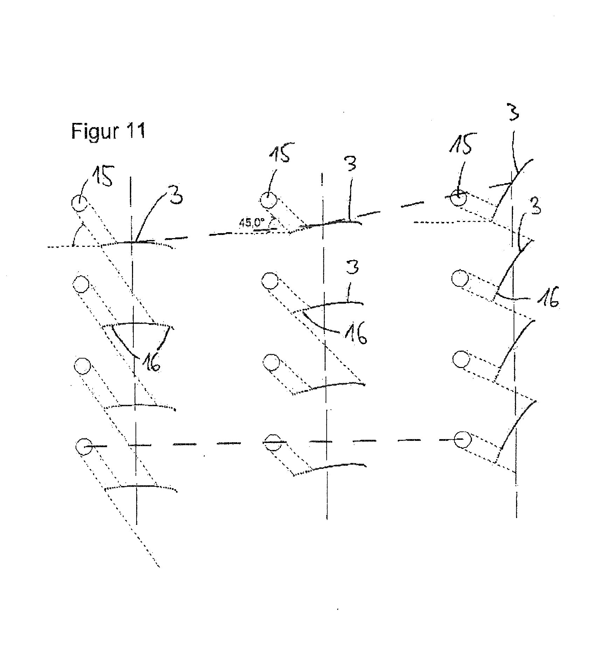

Fig. 11 shows the different angle settings in which the slat 3 are configured in accordance with a photovoltaic surface. Substantially, the whole upper surface of the slat 3 may be provided with photovoltaic elements or flexible photovoltaic layer. A plurality of slats may be arranged vertically to each other. The angle settings may be adjusted by an intelligent slat control unit, in order to minimise the shadow area 16 created by the pre-arranged elements 15 which support the light source. The shadow areas 16 on the slat 3 are here indicated by the dotted lines. It is to be noted that depending on the light radiation angle, the left side achieves a distorted result in terms of the utilisation of photovoltaic surface 3 compared to the middle and the right side. This kind of "intelligent" slat control unit collects light radiation angle and calculates the optimal angle setting for the plurality of slats or for a particular slat individually. The optimal angle settings, i.e. in which the maximal rate of electrical current yield may be achieved with the photovoltaic elements, may comprise the shadow cast of the pre-arranged elements and/or the striking angle of the sunlight radiation on the photovoltaic elements, which may amount up to or close to 90°, if possible. The controlling may be formed as an adjustment or a post-adjustment device for the photovoltaic elements, depending on the sunlight radiation.

Moreover, the slats may be moved in terms of a rotation thereof or vertical shifting of the position thereof, in order to obtain maximal efficiency of the arrangement of the blind device. This is indicated by the dotted lines which run from left to right. In this illustrated embodiment, the vertical movement of the slats are accompanied by a relative movement und a change of the relative distance of the element 15 and/or of the slats. An optimal efficiency of the sunlight radiation may be achieved by the combination of the change of the relative distance and of the angle of the slats 3.

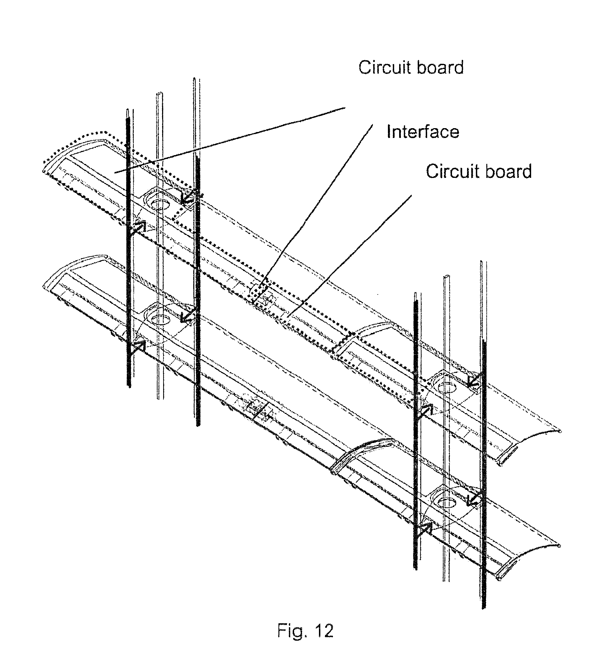

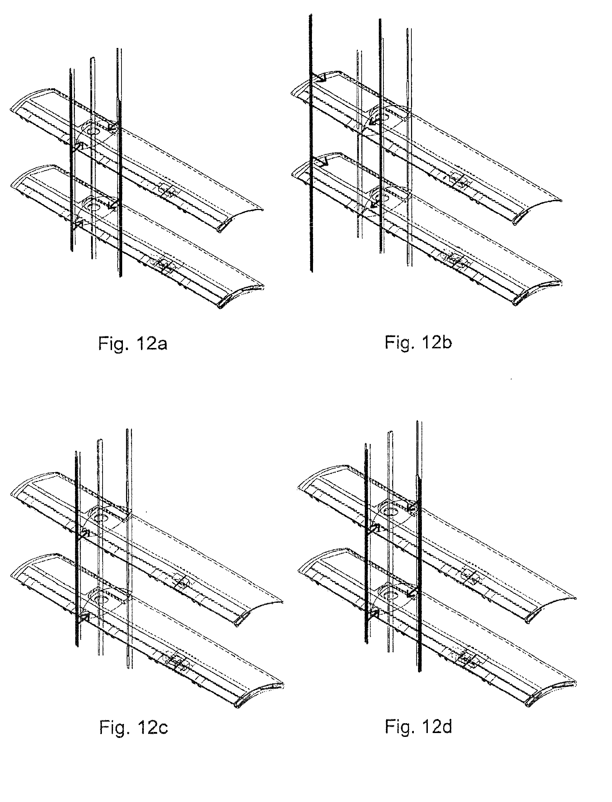

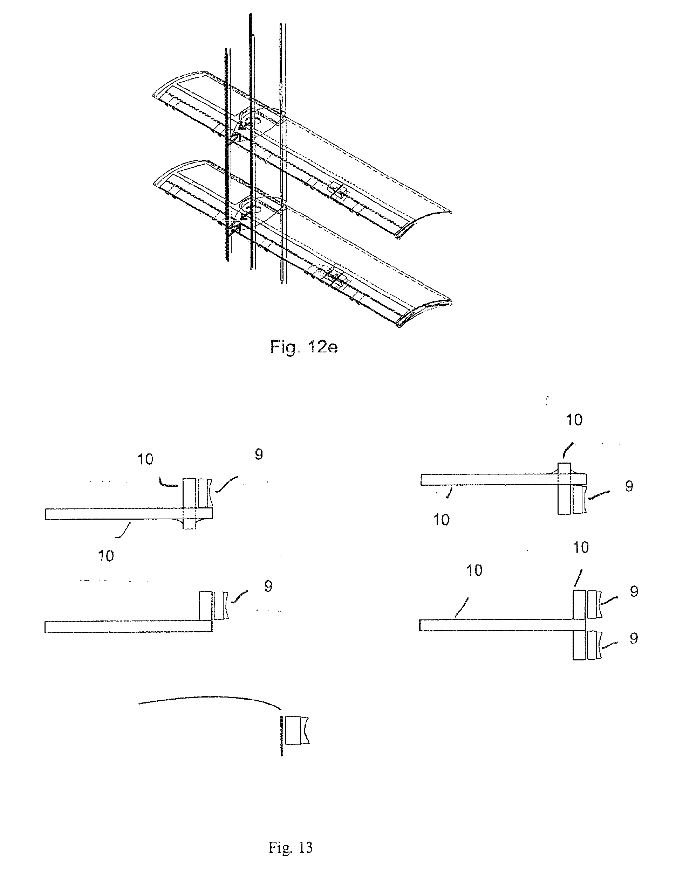

A preferred embodiment of the present invention is schematically shown in Fig. 12. The Figure shows a cut axonometry of two horizontally arranged blind devices according to the present invention. A blind device is mostly designed symmetrically. In order to have a better overview the Figure shows only part of the blind device which is otherwise designed symmetrically.

A plurality of the blind devices according to the present invention may be moved by the lifting cord by an electric motor or crank drive or a manual drive. Thus, they form sunlight protection hangings additionally having one or more light sources that are controllable separately or in groups.

The supply with energy and data and/or control signals of the separate blinds is preferably carried out via one or more wire(s), wherein said wires are preferably arranged directly near the lifting cord and/or near the guide cord. The so-called guide cord in connection with lifting cord in the field of light protection arrangements known in the prior art serve for gathering and adjusting the separate blinds. In a preferred embodiment of the invention, the cable routes of energy/electricity and data/signals are separated from each other and designed as separate wires that are arranged separately on the board. Combining the cables and data lines to one wire is also possible. Due to the fact that the blind device according to the present invention is at the same time sun protection arrangement and/or venetian blind arrangement, the wires for electric current and/or data supply are designed so that the stacking of the blind devices is guaranteed flawlessly. In a preferred embodiment the wires are made of highly flexible materials guaranteeing manifold buckling and bending and ruffling of the cables.

The wire for providing energy and/or data supply are flexibly designed so that they copy the gathering of the guide cord similarly and via similar deformation. The wires are preferably designed so that they allow a gatherable deformation in their geometry. The wires can be separated preferably according to data/signals and/or electric current and be arranged at several positions that are sensible for the assembly of the light protection arrangement. Particularly, preferred positions for arranging them are the planes on the conductor board that are positioned directly close to the guide cord, preferably parallel to their longitudinal axis. In another embodiment the wires are designed so that they serve as guide cord and replace them in their function. In a further embodiment the wires or part of the wires run(s) through or next to the lifting cord. In a further embodiment the wires or part of them are integrated in the guiding rail on the side. In a possible embodiment the wire can be also formed as sliding contacts, on the metal frame surrounding the slats or running through the slats similar to the lifting strip.

Electric current and digitally transmittable signals and/or data run in the direction to at least one of the conductor boards being directly attached to the blind device. Said signals and/or data are preferably transmitted via cables or wirelessly via e.g. blue tooth or another form of wireless data transmission. The signals preferably serve for controlling the separate light sources, preferably by a driving means. The light source may be controlled individually or in groups. The control can be effected via bus system, in series or via wireless data transmission. The energy supply of the LEDs is effected via the power supply line.

If the blind device has at the same time light sources and photovoltaic layers, like e.g. thin film photovoltaic, an electric current supply via energy obtained by the photovoltaic layer is possible. In this case the cable routes can supply the obtained energy from the photovoltaic layer back to the network. It is also possible to store the energy gained by the photovoltaic layer and supply it directly to at least one light source.

Figs. 12a to 12e show, via a cut axonometry of two horizontally arranged blind devices according to the present invention, possible positions where the cables can be arranged regarding the blind device according to the present invention. A combination of the alternatives is also possible.

In a preferred embodiment, the interface between circuit board and wire connection is designed so that it has one or more soldered joints and/or plugs and/or crimp contacts. This interface serves for creating a permanent or releasable connection between circuit board and wire so that the transmission of signals and/or data and/or electric current is possible.

In a preferred embodiment the wire guiding can be led from one blind device to the next. In order to guarantee flexible processing and installation at least one releasable or fixed point with at least one releasable or non-releasable connection can be attached inside the wire portion between two blind devices. Said connection can be formed via plug and/or crimp contact and/or soldering joint.

In a preferred embodiment the connection, namely the soldering joint, crimp contacts and/or plug by a protection hose, shrink hose, adhesive shrink hose and/or a covering film and/or a grouting coating can be protected against impacts from outside. The coating can further be realized by die-casting or a kind of spray coat method.

In a further embodiment the permanent guiding of the wire without releasable connection is also possible. The wire can be made of flat cables, cables with roundish cross-section, sliding contacts or an enlargement of the board itself. The enlargement is preferably a flexible board, which is preferably laminated. The wire, however, is designed in its cross-section so that they are flexible enough and have a cross-section as minimal as possible so that a flawless gathering of the cables is possible when driving the hangings up and down. It is important to guide the cables because the blind device in its function as part of sun protection hangings which can be driven up and down is not restricted.

A blind device contains at least one or more circuit boards at which at least one light source is attached. In a preferred embodiment at least one driver is arranged on the same circuit board, wherein said driver serves for controlling the at least one light source.

Fig. 12 shows a preferred embodiment and thus the possibility to realize the circuit board modularly for the purpose of a more flexible assembly and embodiment of the whole arrangement. Modules, i.e. circuit board modules can be combined with each other in different ways so that a blind device can be flexible in its length and width.

In a blind device according to the present invention, preferably at least one of the light source carriers comprising at least one circuit board is designed so that it can transform the voltage level of the wires to the voltage level on the circuit board. The same or a further circuit board is designed so that it has a particular interface for connecting data and/or energy wires. At least one circuit board can have control functions regarding controlling of the signals to the light sources.

If a plurality of circuit boards is realized in a device according to the present invention, connections between the circuit boards are provided, these connections being designed as permanent or resolvable connections. In a particularly preferred embodiment the connection between at least two circuit boards can be designed so that it has for example soldering joints, crimp connections and/or plugs preferably being protected against impacts from outside by a protection hose, shrink hose, adhesive shrink hose and/or a covering film and/or a grouting coating. The coating can further be realized by die-casting or a kind of spray coat method.

A blind device according to the present invention contains at least one light source and at least one light source carrier preferably comprising a circuit board to which it is attached. The circuit board is directly attached to the blind device so that it moves when driven up and down and/or stacking and/or gathering the blind devices.

The light source is preferably formed by one or more light diodes preferably manufactured on the basis of a LED or OLED or another LED based technology. Preferably these are in an SMD or THT housing and are preferably designed as SideLed, MultiLED or TopLED.

Fig. 13 shows the relation from circuit board to light source in a schematic view. The Figure shows possible embodiments between circuit board and light source. Preferably the light source can be attached to a pass-through board or a board attached by a similar procedure or via a flexible board. It is also possible that the whole circuit board itself is made by a flexible material, a so called flex circuit board. In another preferred embodiment the light source can have at least one contact point and be attached on one side, on the front side or on both sides of the circuit board.

In a particularly preferred embodiment the circuit boards and the corresponding control and electronic units are designed so that they have a sheathing layer preferably a layer being weatherproof. The sheathing layer can preferably be designed in the form of a grouting, a paint or another form of lacquering and/or coating so that after applying this coating the components are water-proof or at least cannot be destroyed by water. Said mass can be applied on the basis of spray coat method, grouting, lacquering, brushing or another kind of permanent lamination.

Preferably, at least one coating of a weatherproof mass is applied on the circuit board, i.e. the wire. In a preferred embodiment the mass has differently developed colour properties which are guaranteed by applying at least two coatings. The colour and/or material property of the coating around the circuit board can for example be different from the colour and/or material property of the coating above or/and directly at the light source. The same is true for differences regarding the transparency of the coating. The cast mass can be deformed in a way that it allows an optimum adaptation to the blind geometry.

In another embodiment a mechanical protection by a cover cap and/or a combination of mechanic protection and coating is possible.

The invention basically provides a device and a method having at least one blind device, i.e. sun protection hangings for light and/or medial playing of sun protection arrangements.

The method provides in particular that the image and/or the light effects are not only created by controlling the separate light sources but are at the same time adjusted with the light protection function of the arrangement.

For example, several light protection hangings according to the present invention arranged next to each other and below each other form a matrix. Said matrix is different depending on building front and building geometry. Different directions as well as different times of the day and year, differently occupied rooms behind the building front form a constantly changing position of the sun protection hangings. The method according to the present invention is provided to adjust and adapt the position of the separate blind devices inside of the hangings with the separately controllable light sources. For example completely driven down blind hangings result in a greater plane that is appropriate for animation or colour change. Hangings that are driven up with gathered blinds that are arranged closely next to each other form a smaller plane which has a greater pixel frequency and is appropriate for transmission of text or separate letters and can thus take over a display function. Simultaneously, one has to pay attention to the quality and kind of the information transmitted via the controllable light sources and to the sensible positioning of the blind hangings so that correspondingly sufficient sun protection for the people sitting behind is guaranteed.

A plurality of hangings according to the present invention arranged next to each other or below each other result in a further design flexibility. The interconnected hangings serve as media plane. Greater arrangements can also result in planes on which videos can be displayed.

The present invention also covers embodiments with combinations of features or groups of features taken from different embodiments described above or claimed below.

## Claims

1. Blind device (1, 12) for controllable sunlight protection comprising
a plurality of slats (3) each being movably attached to said blind device;
at least one guide cord (17) being adapted to hold the slats (3) and/or to rotate the slats;
means for linearly movable arrangement of the slats;
a wire (5) comprising one or more cables for providing electrical connection; and
a plurality of light sources (9) for fulfilment of an illumination and/or display function being attached to the slats (3);
wherein the light sources (9) are arranged on light source carriers (10) that are attached to and/or integrated into the plurality slats (3); and
wherein a connection between the wire (5) and the respective light source carriers (10) is designed as a releasable connection.

2. Blind device according to claim 1, wherein a lifting strip or cord (4) adapted to elevate the slats (3) provides the means for linearly movable arrangement of the slats.

3. Blind device according to claims 1 or 2, wherein the light sources (9) form a display panel that can be used for illumination or as an information carrier for animations and/or images and wherein the display function is present even when the slats (3) are driven up and closely stacked and ruffled next to each other.

4. Blind device according to claims 1, 2, or 3, wherein the slats (3) provide the light source carriers (10), in particular wherein a deformation of the slats (3) forms the light source carriers (10).

5. Blind device according to claims 1, 2, or 3, wherein the light source carriers (10) are adapted to be connected to the slats (3), preferably wherein the light source carriers (10) have a housing.

6. Blind device according to any of the preceding claims, wherein control of the blind device is effected via a bus system.

7. Blind device according to any of the preceding claims, wherein the light source carriers (10) each include at least one circuit board and an interface is provided that serves for creating a releasable connection between the circuit board and the wire (5).

8. Blind device according to any of the preceding claims, wherein the light source carriers (10) each include circuit boards that are modularly configured.

9. Blind device according to any of the preceding claims, wherein SIDELED or TOPLED are used as light sources (9).

10. Blind device according to any of the preceding claims, wherein the wire (5) is integrated or bundled with the lifting strip and/or with the guide cord.

11. Blind device according to any of the preceding claims, wherein the wire (5) is designed so that it serves as guide cord (17) and replaces its function.

12. Blind device according to any of the preceding claims, wherein the plurality of light sources (9) are divided into at least two groups having different illumination directions.

13. Blind device according to any of the preceding claims, wherein the slats (3) have concave and convex surfaces to reflect and/or direct the light.

14. Blind device according to any of the preceding claims, wherein the upper surface of the slats is provided with photovoltaic elements or a flexible photovoltaic layer.

15. Blind device according to any of the preceding claims, wherein the blind device is configured to wirelessly receive signals that serve for controlling the separate light sources.
